# FASCICULE DE BREVET EUROPEEN

(11) **EP 1 849 541 B1**
(45) Date de publication et mention de la délivrance du brevet: **11.03.2009**
(21) Numéro de dépôt: 06113214.8
(22) Date de dépôt: 27.04.2006
(51) Int. Cl.: B23B 13/02, B23Q 7/02

(54) **Installation de chargement séquentiel de barres de matériau dans une machine d'usinage**
Einrichtung zum sequenziellen Zuführen von Stangen in eine Werkzeugmaschine
Apparatus for sequential loading of bars in a machine tool

(43) Date de publication de la demande: 31.10.2007
(73) Titulaire: LNS S.A., 2534 Orvin (CH)
(72) Inventeur: Schaerer, Rolf, 2534 Orvin (CH)
(74) Mandataire: BOVARD AG

(56) Documents cités:
- EP-A- 0 344 731
- GB-A- 1 438 409
- US-B1- 6 182 543

## Description

L'invention se rapporte à une installation de chargement séquentiel de barres de matériau dans une machine d'usinage de ces barres, telle que la définit le préambule de la revendication 1. Une telle installation est connue du document US 6,182,543 B1.

Dans le domaine de la fabrication mécanique, il est connu de produire des pièces sur des machines de tournage automatiques, à partir de barres de matériau, et ce, en procédant à des usinages successifs de portions longitudinales de ces barres.

Les installations de chargement du type précité sont connues dans ce domaine, sous le nom de «ravitailleurs de barres» et servent au ravitaillement de telles machines automatiques de tournage, utilisées en production industrielle.

La partie d'une telle machine d'usinage qui accueille une barre est généralement, mais non limitaitvement, une partie rotative tubulaire, dite broche.

Les installations de chargement séquentiel de barres comprennent des dispositifs fonctionnels qui permettent d'assurer différentes fonctions dont notamment :
- une fonction combinant des actions de soutien et de guidage d'une barre, notamment pendant sa rotation, et ce, au cours d'un déplacement en translation de cette barre selon un axe de guidage, notamment sensiblement coaxial à la partie de la machine d'usinage qui doit être traversée par ladite barre, afin d'être présentée à un système d'outils situé dans cette machine,
- une fonction de stockage d'une pluralité de barres,
- des fonctions de sélection et de prélèvement d'une barre,
- des fonctions de déplacement en translation de la barre sélectionnée, de manière à engendrer sélectivement,
   - le déplacement de cette barre de manière à la disposer dans une position dite d'attente de chargement,
   - la poussée de la barre, par séquence, notamment à travers la machine d'usinage, depuis ladite position dite d'attente de chargement jusqu'à ce qu'un nombre déterminé de pièces ait été réalisé,
   - l'extraction de la machine d'usinage d'un segment de barre qui n'aurait pas été utilisé dans cette machine d'usinage,
   - le déplacement dudit segment de barre non utilisé, communément dit « chute », jusqu'à une dernière position, telle celle d'un poste d'évacuation de ce segment de barre.

L'invention permet avantageusement, mais non exclusivement, la construction d'installations de chargement séquentiel de barres qui sont très flexibles et qui sont donc difficiles à manipuler lorsqu'elles ne sont pas réunies en faisceaux.

Un des résultats que l'invention vise à obtenir est une installation du type précité qui permette de manipuler des barres individualisées et fonctionne d'une manière fiable compte tenu de la flexibilité de chacune de ces barres.

Un autre des résultats que l'invention vise à obtenir est une installation du type précité qui dispose d'une grande réserve de barres en vue d'assurer une longue autonomie de fonctionnement à la machine d'usinage qu'elle permet d'alimenter.

Est encore un autre résultat que l'invention vise à obtenir, le chargement de l'installation en temps masqué.

D'autres résultats apparaîtront à la lecture de la description ci-après faite à titre d'exemple non limitatif en regard du dessin ci-annexé qui représente schématiquement :
Figure 1 : vue latéralement, une installation selon l'invention et une machine d'usinage qui est associée à cette installation,

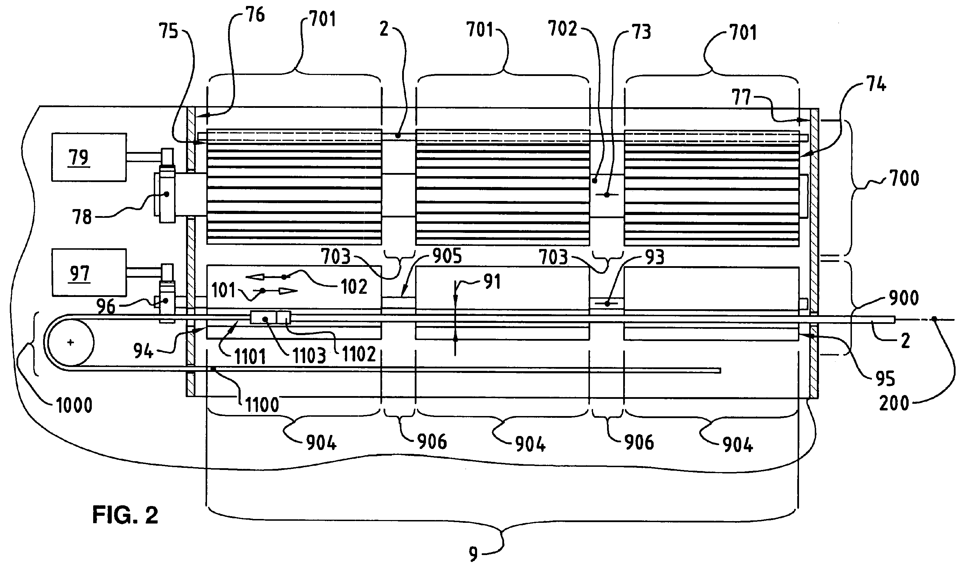

Figure 2 : une vue partielle et en coupe longitudinale d'une installation selon l'invention,

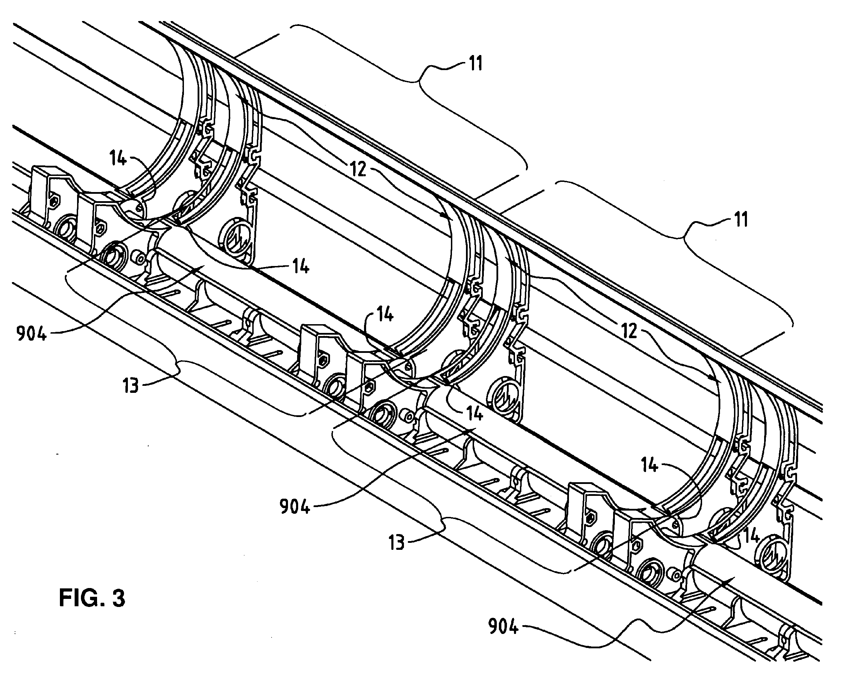

Figure 3 : une vue en perspective de l'installation dont une partie (premier corps) a été déposée,

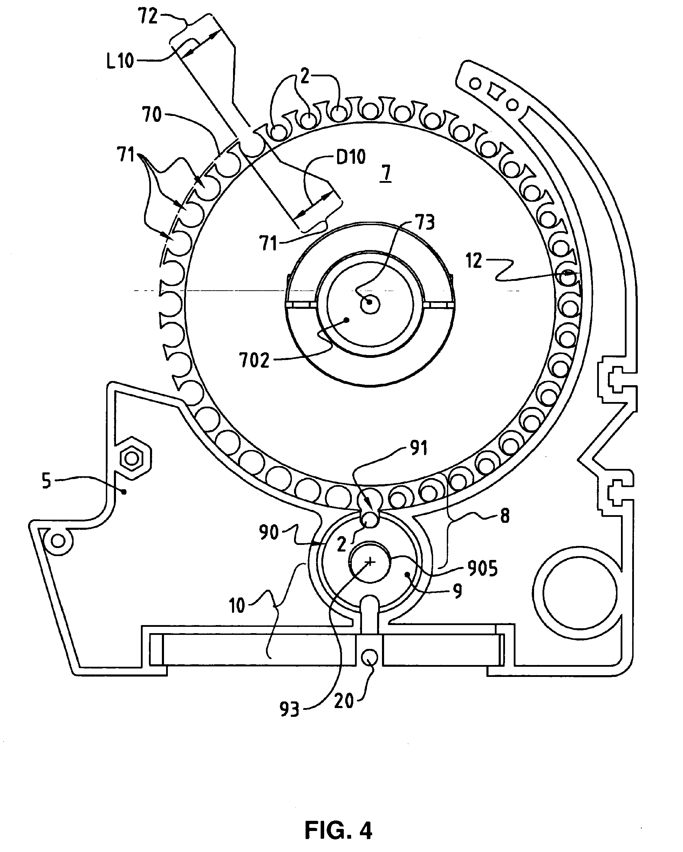

Figure 4 : l'installation vue partiellement depuis une extrémité,

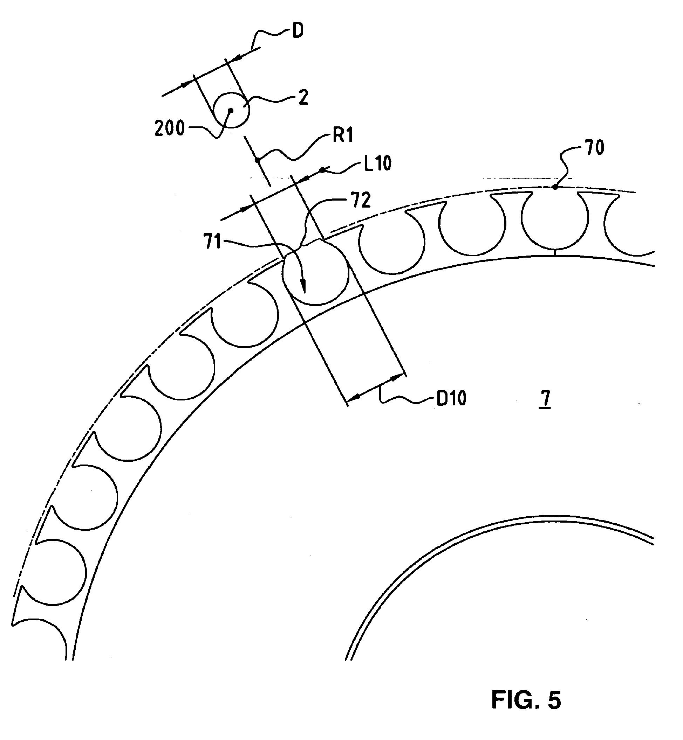

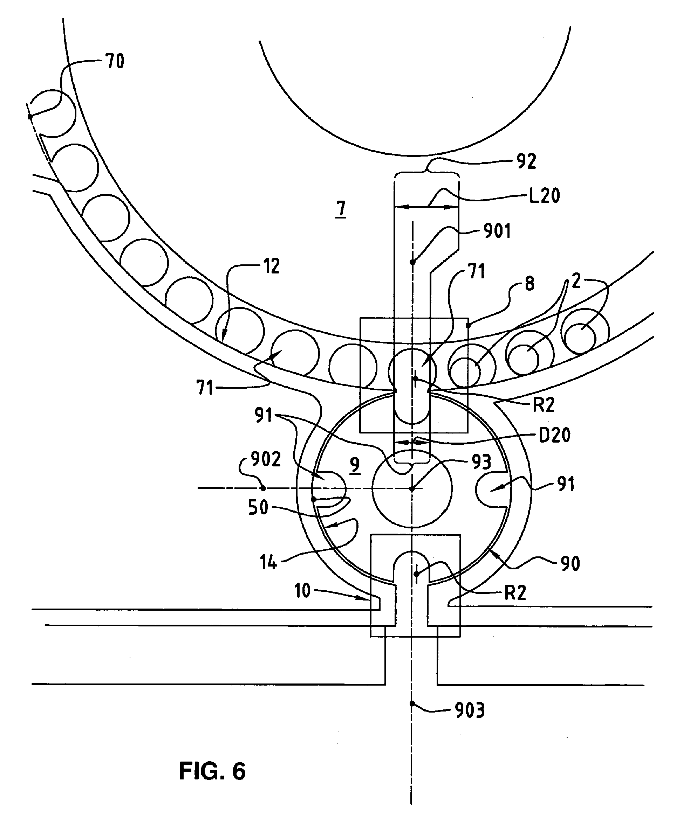

Figures 5 et 6 : à plus grande échelle, deux détails de la figure 4.

En se reportant au dessin, on voit une installation de chargement séquentiel 1 de barres de matériau, dite barre 2, dans une machine d'usinage 4 de ces barres 2.

Ci-après l'installation de chargement séquentiel 1 de barres 2 est plus simplement désignée sous l'appellation installation 1.

Non limitativement, on voit que l'installation 1 permet le chargement séquentiel 1 de barres 2 dans une partie 3 de la machine d'usinage 4..

La partie 3 est par exemple une broche.

La machine d'usinage 4 des barres 2 est plus simplement désignée par l'expression machine d'usinage 4, laquelle machine d'usinage 4 est uniquement symbolisée et ne sera pas décrite en détails.

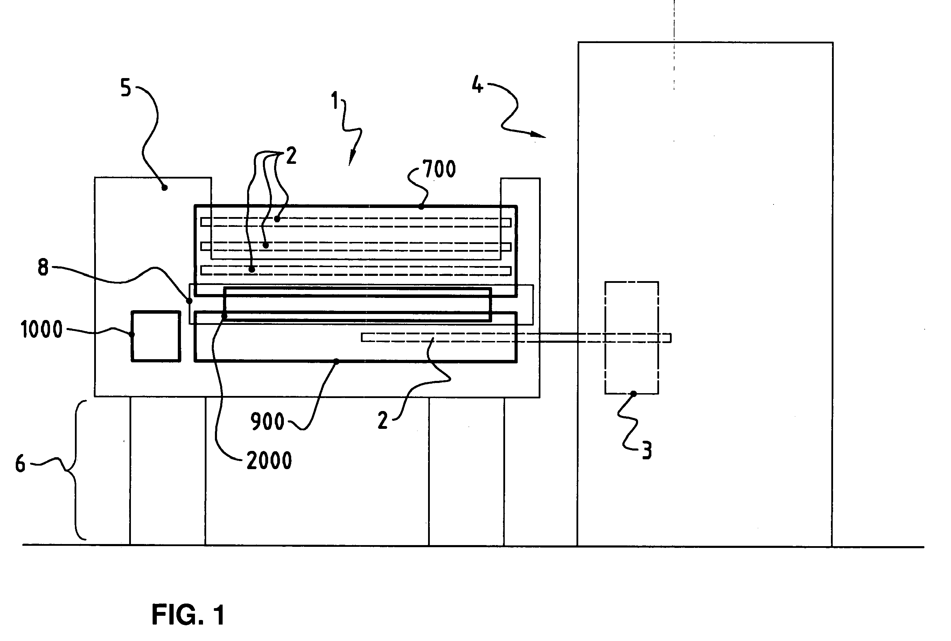

On voit que l'installation 1 comprend un bâti 5 qui, comme la machine d'usinage 4, prend appui sur un support, notamment, sensiblement horizontal, tel le sol (symbolisé par un trait sur la figure 1).

De préférence, le bâti 5 de l'installation 1 prend appui au sol par un piètement 6 de type réglable en hauteur, en vue du réglage en hauteur de l'installation par rapport à la machine 4 et, notamment, par rapport à la broche 3 de cette machine 4.

De manière remarquable, l'installation 1 est équipée :
- d'un premier dispositif 700 qui est,
   - d'une part, constitué par un premier corps 7 allongé dont le volume est substantiellement déterminé par une face périphérique, dite première face 70, et comportant une pluralité de premières cavités 71 longitudinales qui sont chacune capable de loger une barre 2 et comportent chacune une première ouverture 72 aménagée dans ladite première face 70,
   - d'autre part, capable d'effectuer une rotation fractionnée autour d'un premier axe 73 orienté longitudinalement, notamment en portant des barres 2, pour présenter séquentiellement les premières cavités 71 à au moins un premier poste 8,
- d'un second dispositif 900 qui est,
   - d'une part, constitué par un second corps 9 allongé dont le volume est substantiellement déterminé par une face périphérique, dite seconde face 90, et comportant au moins une seconde cavité 91 longitudinale qui est capable de loger une barre 2 et comporte une seconde ouverture 92 aménagée dans ladite seconde face 90,
   - d'autre part, capable d'effectuer un déplacement de rotation fractionnée autour d'un second axe 93 orienté longitudinalement, et ce, entre au moins deux positions angulaires dont une première position angulaire 901 dans laquelle la seconde cavité 91 est située en vis-à-vis d'une première cavité 71 placée au premier poste 8 et une seconde position angulaire 902 dans laquelle ladite seconde cavité 91 est radialement fermée de manière telle que la barre 2 qu'elle retient est guidée en rotation et en translation selon l'axe longitudinal 200 qu'elle présente.

Sur les dessins, la première face 70 a été symbolisé par un trait fin interrompu.

La seconde position angulaire 902 est une position dans laquelle la barre 2 est guidée en rotation et en translation de manière à être chargée dans la broche d'une machine d'usinage 4 à laquelle l'installation 1 est associée.

Cela impique bien entendu que l'installation 1 et la machine d'usinage 4 aient préalablement été disposées de manière convenable, l'une par rapport à l'autre.

On verra plus après qu'il existe également une troisième position angulaire 903, mais il peut encore exister d'autres positions.

Le volume du premier corps 7 est également déterminé par deux faces extrêmes opposées dites troisième face 74 et quatrième face 75.

De manière notable, le premier corps 7 et le second corps 9 sont, au niveau du premier poste 8, sensiblement tangents selon des génératrices longitudinales.

Le premier corps 7 assure donc une fonction de stockage en se comportant comme un magasin rotatif.

Le second corps 9 assure une double fonction dont une fonction de sélection d'une barre 2 et une fonction de guidage en rotation et en translation de la barre 2 sélectionnée.

De manière notable :
- chaque première cavité 71 a des dimensions longitudinale et transversale qui sont adaptées pour autoriser le logement d'une barre 2 de dimensions longitudinale et transversale maximales prédéterminées, et
- la première ouverture 72 de chaque première cavité 71 a des dimensions longitudinale et transversale qui sont adaptées pour autoriser indifféremment l'introduction d'une barre 2 dans la première cavité 71 et l'extraction d'une barre 2 de cette première cavité 71, et ce, dans une première direction "R1" radiale au premier corps 7.

Dans une première forme de réalisation, le premier corps 7 comprend une première série de premières cavités 71 qui ont toutes la même section transversale prédéterminée pour accueillir des barres 2 dont le diamètre extérieur "D" peut être compris entre deux valeurs prédéterminées.

Par diamètre extérieur "D", on désigne le diamètre d'un volume généré par la rotation de la barre 2 autour de son axe longitudinal 200.

En effet, les barres 2 n'ont pas une section transversale limitativement circulaire.

Les barres 2 peuvent avoir une section transversale carrée, hexagonale ou autre.

Dans une seconde forme de réalisation, le premier corps 7 comprend plusieurs séries de premières cavités 71 qui ont des sections transversales différentes, par exemple, deux séries de premières cavités 71 de deux sections transversales différentes.

Cela permet de construire un premier corps adapté pour contenir une variété accrue de diamètres de barres 2.

Quoi qu'il en soit, le premier corps 7 comprend donc au moins une première série de premières cavités 71 qui ont toutes la même section transversale prédéterminée pour accueillir des barres 2 dont le diamètre extérieur "D" peut être compris entre deux valeurs prédéterminées.

Lorsque lesdites troisième face 74 et quatrième face 75 du premier corps 7 comportent des orifices formés par les extrémités des premières cavités 71, ladite troisième face 74 et ladite quatrième face 75 sont chacune située en regard d'une paroi, dite première paroi 76 et seconde paroi 77 qui s'opposent à une éventuelle éjection axiale d'une barre 2.

Ainsi aucune éjection axiale ne peut perturber le fonctionnement de l'installation 1, notamment la rotation dudit premier corps 7.

De manière encore notable :
- chaque seconde cavité 91 a des dimensions longitudinale et transversale qui sont adaptées pour autoriser le logement d'une barre 2 de dimensions longitudinale et transversale maximales prédéterminées, et
- la seconde ouverture 92 de chaque seconde cavité 91 a des dimensions longitudinale et transversale qui sont adaptées pour autoriser indifféremment l'introduction d'une barre 2 dans la seconde cavité 91 et l'extraction d'une barre 2 de la seconde cavité 91, et ce, dans une seconde direction "R2" radiale au second corps 9.

Le volume du second corps 9 est également déterminé par deux faces extrêmes opposées dites cinquième face 94 et sixième face 95.

Dans une première forme de réalisation, le second corps 9 comprend une seconde cavité 91 de section transversale prédéterminée pour accueillir des barres 2 dont le diamètre extérieur "D" peut être compris entre deux valeurs prédéterminées.

Dans une seconde forme de réalisation, le second corps 9 comprend plusieurs secondes cavités 91 qui ont des sections transversales différentes, par exemple, deux secondes cavités 91 de deux sections transversales différentes.

Par exemple, le second corps 9 comprend au moins :
- une seconde cavité 91 dont la section transversale est adaptée pour accueillir des barres 2 dont le diamètre extérieur "D" est compris dans un premier intervalle prédéterminé et,
- une autre seconde cavité 91 dont la section transversale est adaptée pour accueillir des barres 2 dont le diamètre extérieur "D" est compris dans un second intervalle prédéterminé distinct du premier intervalle prédéterminé.

Cela permet de construire un second corps adapté pour accueillir et surtout guider une variété accrue de diamètres de barres 2.

Cependant, lorsque le second corps 9 comprend plusieurs secondes cavités 91 qui ont des sections transversales différentes, par exemple, deux secondes cavités 91 de deux sections transversales différentes, cela n'implique pas forcément que le premier corps comprend aussi plusieurs séries de premières cavités 71 qui ont des sections transversales différentes, par exemple, deux séries de premières cavités 71 de deux sections transversales différentes.

En d'autres termes, lorsque le second corps 9 comprend plusieurs secondes cavités 91 qui ont des sections transversales différentes, par exemple, deux secondes cavités 91 de deux sections transversales différentes, le premier corps peut ne comprendre qu'une seule série de premières cavités 71.

Avantageusement, le second corps 9 comprend au moins :
- un premier ensemble de deux secondes cavité 91 dont la section transversale est adaptée pour accueillir des barres 2 dont le diamètre extérieur "D" est compris dans un premier intervalle prédéterminé et les deux secondes cavités de ce premier ensemble ont des situations diamétralement opposées sur le second corps 9,
- un second ensemble de deux autres secondes cavités 91 dont la section transversale est adaptée pour accueillir des barres 2 dont le diamètre extérieur "D" est compris dans un second intervalle prédéterminé distinct du premier intervalle prédéterminé et les deux secondes cavités de ce second ensemble ont également des situations diamétralement opposées sur le second corps 9.

L'installation 1 est équipée d'un troisième dispositif 1000 qui coopère avec le second dispositif 900 et est, capable d'assurer le déplacement en translation de la barre 2 contenue dans la seconde cavité 91, et ce,
- dans un premier sens 101 correspondant à un sens d'introduction de la barre 2 dans une machine d'usinage 4 et,
- dans un second sens 102, opposé au premier sens 101, en vue de retirer de la machine outil 4 un segment 20 de la barre 2 qui n'est pas utilisé et de replacer ce segment dans la seconde cavité 91 qui contenait la barre 2 dont ce segment 20 est issu.

Avantageusement ce troisième dispositif 1000 est du type connu, mettant en oeuvre un organe flexible 1100 qui peut s'étendre sensiblement parallèlement au second corps 9 et :
- par l'une des parties terminales 1101 être introduit dans la seconde cavité 91, dans le premier sens 101, de manière à agir sur une barre 2 qui s'y trouve placée pour la pousser axialement et progressivement à l'intérieur de ladite seconde cavité 91, et
- être retiré axialement de ladite seconde cavité 91, dans le second sens 102, notamment de manière à extraire le segment 20 de barre 2 restant, et, par exemple, à être replacé sensiblement parallèlement au second corps 9.

Celle des parties terminales 1101 de l'organe flexible 1100 qui est introduite dans la seconde cavité 91 est équipée d'un organe de pincement 1102 d'une extrémité de la barre 2.

L'organe de pincement 1102 est monté sur la partie terminale 1101 correspondante de l'organe flexible 1100 au moyen d'au moins un élément connu sous le nom d'embout tournant 1103.

Le troisième dispositif 1000 n'est pas décrit en détail car il est connu en tant que tel.

Le second corps 9 du second dispositif 900 est capable d'effectuer un déplacement de rotation fractionnée vers une troisième position angulaire 903 dans laquelle chaque seconde cavité 91 est présentée à un poste d'évacuation dit second poste 10 au niveau duquel le segment 20 peut être évacué de la seconde cavité 91.

Chaque première cavité 71 a une première ouverture 72 qui est de première largeur "L10" supérieure au diamètre extérieur "D" de la barre 2 qui doit être introduite dans cette première cavité 71 et ladite première cavité 71 a une section transversale déterminée par une première surface interne de profil sensiblement en forme de C, dans laquelle s'inscrit une première dimension diamétrale "D10" qui est supérieure à la première largeur "L10" de ladite première ouverture 72.

Chaque seconde cavité 91 a une seconde ouverture 92 qui est de seconde largeur "L20" supérieure au diamètre extérieur "D" de la barre 2 qui doit être introduite dans cette seconde cavité 91 et ladite seconde cavité 91 a une section transversale déterminée par une seconde surface interne de profil sensiblement en forme de U, dans laquelle s'inscrit une seconde dimension diamétrale "D20" sensiblement égale à la seconde largeur "L20" de ladite seconde ouverture 92.

Dans la seconde position angulaire 902, la seconde cavité 91 est placée en regard d'une troisième surface 50 qui la ferme de manière telle qu'une barre 2 placée dans cette seconde cavité 91 peut être guidée en rotation et en translation selon l'axe longitudinal 200 qu'elle présente.

Sur le dessin, on a représenté la seconde position angulaire décalée de quatre vingt dix degrés par rapport à la première position angulaire, mais il ne s'agit que d'un exemple.

La troisième surface 50 est avantageusement constituée par une portion d'une face d'un alésage prévu dans le bâti 5 de l'installation pour recevoir le second corps 9.

Le premier corps 7 est équipé d'un premier organe 78 de réception d'un mouvement de rotation imprimé par un premier appareil moteur 79 commandé, notamment solidaire du bâti 5.

Avantageusement, le premier organe 78 de réception d'un mouvement de rotation consiste avantageusement en une roue dentée qui engrène avec un pignon entraîné en rotation par le premier appareil moteur 79.

Le second corps 9 est équipé d'un second organe 96 de réception d'un mouvement de rotation imprimé par un second appareil moteur 97 commandé, notamment solidaire du bâti 5.

Avantageusement, le second organe 96 de réception d'un mouvement de rotation consiste avantageusement en une roue dentée qui engrène avec un pignon entraîné en rotation par le second appareil moteur 97.

Le premier appareil moteur 79 et le second appareil moteur 97 consistent avantageusement en des moto-réducteurs électriques qui sont commandés par une unité de commande programmable (non représentée).

Quoi qu'il en soit, la rotation du premier corps 7 peut être commandée distinctement de la rotation de celle du second corps 9, de manière telle que des barres 2 puissent être chargées dans le premier corps 7, par exemple, pendant qu'une barre 2 est guidée en rotation et en translation dans une seconde cavité 91 du second corps 9.

Le premier corps 7 est constitué par assemblage d'au moins un premier tronçon 701 sur un premier arbre 702.

Avantageusement, le premier corps 7 est constitué par assemblage de plusieurs premiers tronçons 701 sensiblement identiques sur un premier arbre 702.

Cette particularité technique permet de construire des installations 1 dont la longueur du premier corps 7 peut être ajustée.

Cela permet de constituer des installations 1 de différentes longueurs et de répondre plus aisément à des exigences différentes au plan de la longueur desdites installations 1 et/ou de la longueur des barres 2 à usiner.

Par exemple chaque premier tronçon 701 a une longueur d'environ cinq cent millimètres.

Par exemple, chaque premier tronçon 701 est constitué par assemblage de quatre secteurs de paroi cylindriques sur deux flasques circulaires.

Chaque secteur de paroi cylindrique consiste en une pièce dont la section transversale est profilée pour porter une pluralité de premières cavités 71.

Les flasques comportent chacun un alésage axial permettant le passage du premier arbre 702, le centrage et l'immobilisation en sur ledit premier arbre 702.

Ces détails de construction ne sont pas représentés.

L'installation 1 comporte au moins un premier groupe 11 de deux premières portées 12 qui, chacune destinée à coopérer avec la première face 70 du premier corps 7 sur une fraction prédéterminée de sa dimension longitudinale,
- sont séparées d'une distance prédéterminée pour définir un appui cylindrique sensiblement horizontal,
- s'étendent chacune sur au moins une première portion angulaire de la première face 70 prédéterminée pour,
   - assurer un appui cylindrique du premier corps 7,
   - autoriser l'accès radial à au moins une première cavité 71 en vue du chargement d'une barre 2,
   - entraver la chute de barres 2 hors de chaque première cavité 71 qui la contient, pendant la rotation dudit premier corps 7 en vue de présenter séquentiellement chaque première cavité 71 devant au moins un premier poste 8,
   - autoriser l'extraction d'une barre 2 audit premier poste 8.

L'installation 1 comprend autant de premiers groupes 11 de premières portées 12 qu'elle comporte de premiers tronçons 701.

Le second corps 9 est également constitué par assemblage d'au moins un second tronçon 904 sur un second arbre 905.

Avantageusement, le second corps 9 est constitué par assemblage de plusieurs seconds tronçons 904 sensiblement identiques sur un second arbre 905.

L'installation 1 comporte au moins un second groupe 13 de deux secondes portées 14 qui, chacune destinée à coopérer avec la seconde face 90 du second corps 9 sur une fraction prédéterminée de sa dimension longitudinale,
- sont séparées d'une distance prédéterminée pour définir un appui cylindrique sensiblement horizontal,
- s'étendent chacune sur au moins une seconde portion angulaire de la seconde face 90 prédéterminée pour,
   - assurer un appui cylindrique du second corps 9 au moins entre les positions angulaires 901, 902, 903 dites première, seconde et troisième, de manière à
   - dans la première position angulaire 901, autoriser l'accès radial à au moins une seconde cavité 91 en vue du chargement d'une barre 2 dans la seconde cavité 91 lorsqu'elle est située en vis-à-vis d'une première cavité 71 placée au premier poste 8,
      .. entraver la chute de la barre 2 pendant la rotation dudit second corps 9 vers la seconde position angulaire 902,
      .. participer au guidage en rotation et en translation de la barre 2 lorsque le second corps 9 est placé dans la seconde position angulaire 902,
      .. entraver la chute d'un segment 20 de barre 2 pendant la rotation dudit second corps 9 vers la troisième position angulaire 903 et autoriser sa chute lorsque ladite troisième position angulaire 903 est atteinte.

L'installation 1 comprend autant de seconds groupes 13 de secondes portées 14 qu'elle comporte de seconds tronçons 904.

De manière préférentielle,
- le premier corps 7 a un premier axe 73 qui est sensiblement horizontal et le premier poste 8 est situé à l'aplomb d'une génératrice longitudinale inférieure dudit premier corps 7,
- le second corps 9 a un second axe 93 qui est sensiblement horizontal et est situé sous le niveau du premier corps 7 et dans un plan vertical qui passe par le premier axe 73 du premier corps 7,
- la première position angulaire 901 du second corps 9 correspond à la situation dans laquelle la seconde cavité 91 est placée en regard d'une première cavité 71 présentée au premier poste 8,
- la troisième position angulaire 903 du second corps 9 correspond à la situation dans laquelle la seconde ouverture 92 d'une seconde cavité 91 qui contient un segment 20 est présenté au second poste 10, et cette troisième position angulaire 903 est décalée de sensiblement cent quatre vingt degrés par rapport à la première position angulaire 901, de manière telle que le segment 20 puisse être évacué par gravité,
- la seconde position angulaire 902 du second corps 9 est comprise entre la première position angulaire 901 et la troisième position angulaire 903.

En général, chaque barre 2 placée au premier poste 8, peut du fait de la gravité, quitter la première cavité 71 qui la contient pour descendre dans une seconde cavité 91.

Cependant, de manière remarquable, le premier poste 8 comprend un quatrième dispositif 2000 pour assister le transfert d'une barre 2 située dans une première cavité 71 du premier corps 7 vers une seconde cavité 91 du second corps 9.

Ce quatrième dispositif 2000 permet d'assurer la descente de toute barre 2 qui, du fait d'une certaine courbure, serait retenue dans une première cavité 71.

De manière remarquable :
- les premiers tronçons 701 assemblés sur le premier arbre 702 en vue de constituer le premier corps 7 sont, deux à deux, axialement espacés d'une première valeur prédéterminée de manière à déterminer un premier espacement 703,
- les seconds tronçons 904 assemblés sur le second arbre 905 en vue de constituer le second corps 9 sont, deux à deux, axialement espacés d'une deuxième valeur prédéterminée, de manière à déterminer un second espacement 906,
- le quatrième dispositif 2000 pour le transfert d'une barre 2 située dans une première cavité 71 du premier corps 7 vers une seconde cavité 91 du second corps 9, comprend des organes qui sont disposés pour être actifs dans lesdits premier espacement 703 et second espacement 906.

La construction en tronçons est donc parfaitement mise à profit pour loger au moins certains éléments constitutifs du quatrième dispositif 2000.

## Revendications

1. Installation de chargement séquentiel (1) de barres de matériau, dite barre (2), dans une machine d'usinage (4), cette installation comprenant notamment un bâti (5) et étant équipée:
- d'un premier dispositif (700) qui est,
. d'une part, constitué par un premier corps (7) allongé dont le volume est substantiellement déterminé par une face périphérique, dite première face (70), et comportant une pluralité de premières cavités (71) longitudinales qui sont chacune capable de loger une barre (2) et comportent chacune une première ouverture (72) aménagée dans ladite première face (70),
. d'autre part, capable d'effectuer une rotation fractionnée autour d'un premier axe (73) orienté longitudinalement, notamment en portant des barres (2), pour présenter séquentiellement les premières cavités (71) à au moins un premier poste (8),
- d'un second dispositif (900) qui est constitué par un second corps (9) allongé dont le volume est substantiellement déterminé par une face périphérique, dite seconde face (90), et comportant au moins une seconde cavité (91) longitudinale qui est capable de loger une barre (2) et comporte une seconde ouverture (92) aménagée dans ladite seconde face (90),
**caractérisée en ce que** le second dispositif est capable d'effectuer un déplacement de rotation fractionnée autour d'un second axe (93) orienté longitudinalement, et ce, entre au moins deux positions angulaires dont une première position angulaire (901) dans laquelle la seconde cavité (91) est située en vis-à-vis d'une première cavité (71) placée au premier poste (8) et une seconde position angulaire (902) dans laquelle ladite seconde cavité (91) est radialement fermée de manière telle que la barre (2) qu'elle retient est guidée en rotation et en translation selon l'axe longitudinal (200) qu'elle présente.

2. Installation selon la revendication 1, **caractérisée en ce que :**
- chaque première cavité (71) a des dimensions longitudinale et transversale qui sont adaptées pour autoriser le logement d'une barre (2) de dimensions longitudinale et transversale maximales prédéterminées, et
- la première ouverture (72) de chaque première cavité (71) a des dimensions longitudinale et transversale qui sont adaptées pour autoriser indifféremment l'introduction d'une barre (2) dans la première cavité (71) et l'extraction d'une barre (2) de cette première cavité (71), et ce, dans une première direction ("R1") radiale au premier corps (7).

3. Installation selon la revendication 1 ou 2, **caractérisée en ce que :**
- chaque seconde cavité (91) a des dimensions longitudinale et transversale qui sont adaptées pour autoriser le logement d'une barre (2) de dimensions longitudinale et transversale maximales prédéterminées, et
- la seconde ouverture (92) de chaque seconde cavité (91) a des dimensions longitudinale et transversale qui sont adaptées pour autoriser indifféremment l'introduction d'une barre (2) dans la seconde cavité (91) et l'extraction d'une barre (2) de la seconde cavité (91), et ce, dans une seconde direction ("R2") radiale au second corps (9).

4. Installation selon l'une quelconque des revendications 1 à 3, **caractérisée en ce qu'**elle est équipée d'un troisième dispositif (1000) qui coopère avec le second dispositif (900) et est, capable d'assurer le déplacement en translation de la barre (2) contenue dans la seconde cavité (91), et ce,
- dans un premier sens (101) correspondant à un sens d'introduction de la barre (2) dans une machine d'usinage (4) et,
- dans un second sens (102), opposé au premier sens (101), en vue de retirer de la machine outil (4) un segment (20) de la barre (2) qui n'est pas utilisé et de replacer ce segment dans la seconde cavité (91) qui contenait la barre (2) dont ce segment (20) est issu.

5. Installation selon l'une quelconque des revendications 1 à 4, **caractérisée en ce que** le second corps (9) du second dispositif (900) est capable d'effectuer un déplacement de rotation fractionnée vers une troisième position angulaire (903) dans laquelle chaque seconde cavité (91) est présentée à un poste d'évacuation dit second poste (10) au niveau duquel le segment (20) peut être évacué de la seconde cavité (91).

6. Installation selon l'une quelconque des revendications 1 à 5, **caractérisée en ce que** chaque première cavité (71) a une première ouverture (72) qui est de première largeur ("L10") supérieure au diamètre extérieur ("D") de la barre (2) qui doit être introduite dans cette première cavité (71) et ladite première cavité (71) a une section transversale déterminée par une première surface interne de profil sensiblement en forme de (C), dans laquelle s'inscrit une première dimension diamétrale ("D10") qui est supérieure à la première largeur ("L10") de ladite première ouverture (72).

7. Installation selon l'une quelconque des revendications 1 à 6, **caractérisée en ce que** chaque seconde cavité (91) a une seconde ouverture (92) qui est de seconde largeur ("L20") supérieure au diamètre extérieur ("D") de la barre (2) qui doit être introduite dans cette seconde cavité (91) et ladite seconde cavité (91) a une section transversale déterminée par une seconde surface interne de profil sensiblement en forme de (U), dans laquelle s'inscrit une seconde dimension diamétrale ("D20") sensiblement égale à la seconde largeur ("L20") de ladite seconde ouverture (92).

8. Installation selon l'une quelconque des revendications 1 à 7, **caractérisée en ce qu'**elle comporte au moins un premier groupe (11) de deux premières portées (12) qui, chacune destinée à coopérer avec la première face (70) du premier corps (7) sur une fraction prédéterminée de sa dimension longitudinale,
- sont séparées d'une distance prédéterminée pour définir un appui cylindrique sensiblement horizontal,
- s'étendent chacune sur au moins une première portion angulaire de la première face (70) prédéterminée pour,
. assurer un appui cylindrique du premier corps (7),
. autoriser l'accès radial à au moins une première cavité (71) en vue du chargement d'une barre (2),
. entraver la chute de barres (2) hors de chaque première cavité (71) qui la contient, pendant la rotation dudit premier corps (7) en vue de présenter séquentiellement chaque première cavité (71) devant au moins un premier poste (8),
. autoriser l'extraction d'une barre (2) audit premier poste (8).

9. Installation selon l'une quelconque des revendications 1 à 8, **caractérisée en ce que** le premier corps (7) est constitué par assemblage d'au moins un premier tronçon (701) sur un premier arbre (702).

10. Installation selon la revendication 9 **caractérisée en ce qu'**elle comprend autant de premiers groupes (11) de premières portées (12) qu'elle comporte de premiers tronçons (701).

11. Installation selon l'une quelconque des revendications 1 à 10, **caractérisée en ce qu'**elle comporte au moins un second groupe (13) de deux secondes portées (14) qui, chacune destinée à coopérer avec la seconde face (90) du second corps (9) sur une fraction prédéterminée de sa dimension longitudinale,
- sont séparées d'une distance prédéterminée pour définir un appui cylindrique sensiblement horizontal,
- s'étendent chacune sur au moins une seconde portion angulaire de la seconde face (90) prédéterminée pour,
. assurer un appui cylindrique du second corps (9) au moins entre les positions angulaires (901, 902, 903) dites première, seconde et troisième, de manière à
. dans la première position angulaire (901), autoriser l'accès radial à au moins une seconde cavité (91) en vue du chargement d'une barre (2) dans la seconde cavité (91) lorsqu'elle est située en vis-à-vis d'une première cavité (71) placée au premier poste (8),
.. entraver la chute de la barre (2) pendant la rotation dudit second corps (9) vers la seconde position angulaire (902),
.. participer au guidage en rotation et en translation de la barre (2) lorsque le second corps (9) est placé dans la seconde position angulaire (902),
.. entraver la chute d'un segment (20) de barre (2) pendant la rotation dudit second corps (9) vers la troisième position angulaire (903) et autoriser sa chute lorsque ladite troisième position angulaire (903) est atteinte.

12. Installation selon l'une quelconque des revendications 1 à 11, **caractérisée en ce que** le second corps (9) est constitué par assemblage d'au moins un second tronçon (904) sur un second arbre (905).

13. Installation selon la revendication 12, **caractérisée en ce qu'**elle comprend autant de seconds groupes (13) de secondes portées (14) qu'elle comporte de seconds tronçons (904).

14. Installation selon l'une quelconque des revendications 1 à 13, **caractérisée en ce que :**
- le premier corps (7) a un premier axe (73) qui est sensiblement horizontal et le premier poste (8) est situé à l'aplomb d'une génératrice longitudinale inférieure dudit premier corps (7),
- le second corps (9) a un second axe (93) qui est sensiblement horizontal et est situé sous le niveau du premier corps (7) et dans un plan vertical qui passe par le premier axe (73) du premier corps (7),
- la première position angulaire (901) du second corps (9) correspond à la situation dans laquelle la seconde cavité (91) est placée en regard d'une première cavité (71) présentée au premier poste (8),
- la troisième position angulaire (903) du second corps (9) correspond à la situation dans laquelle la seconde ouverture (92) d'une seconde cavité (91) qui contient un segment (20) est présenté au second poste (10), et cette troisième position angulaire (903) est décalée de sensiblement cent quatre vingt degrés par rapport à la première position angulaire (901), de manière telle que le segment (20) puisse être évacué par gravité,
- la seconde position angulaire (902) du second corps (9) est comprise entre la première position angulaire (901) et la troisième position angulaire (903).

15. Installation selon l'une quelconque des revendications 1 à 14, **caractérisée en ce que** le premier poste (8) comprend un quatrième dispositif (2000) pour assister le transfert d'une barre (2) située dans une première cavité (71) du premier corps (7) vers une seconde cavité (91) du second corps (9).

16. Installation selon la revendication 15, **caractérisée en ce que** le :
- les premiers tronçons (701) assemblés sur le premier arbre (702) en vue de constituer le premier corps (7) sont, deux à deux , axialement espacés d'une première valeur prédéterminée de manière à déterminer un premier espacement (703),
- les seconds tronçons (904) assemblés sur le second arbre (905) en vue de constituer le second corps (9) sont, deux à deux, axialement espacés d'une deuxième valeur prédéterminée, de manière à déterminer un second espacement (906),
- le quatrième dispositif (2000) pour le transfert d'une barre (2) située dans une première cavité (71) du premier corps (7) vers une seconde cavité (91) du second corps (9), comprend des organes qui sont disposés pour être actifs dans lesdits premier espacement (703) et second espacement (906).

17. Installation selon l'une quelconque des revendications 1 à 16, **caractérisée en ce que** le premier corps (7) comprend plusieurs séries de premières cavités (71) qui ont des sections transversales différentes.

18. Installation selon l'une quelconque des revendications 1 à 17, **caractérisée en ce que** le second corps (9) comprend plusieurs secondes cavités (91) qui ont des sections transversales différentes.

19. Installation selon l'une quelconque des revendications 1 à 18, **caractérisée en ce que** le premier corps (7) et le second corps (9) sont, au niveau du premier poste (8), sensiblement tangents selon des génératrices longitudinales.

## Claims

1. Installation for sequential loading (1) of bars of material, referred to as bar (2), in a machining centre (4), this installation comprising in particular a frame (5) and being equipped:
- with a first device (700) which,
• on the one hand, is constituted by a first elongated body (7), the volume of which is substantially determined by a peripheral surface, referred to as first face (70), and comprising a plurality of first longitudinal cavities (71) which are each able to accommodate a bar (2) and each include a first opening (72) made in said first face (70),
• on the other hand, is able to carry out a fractional rotation about a first axis (73), aligned longitudinally, particularly in carrying bars (2), so as to present the first cavities (71) in sequence to at least one first station (8),
- with a second device (900) which is constituted by a second elongated body (9), the volume of which is substantially determined by a peripheral face, referred to as the second face (90), and including at least one second longitudinal cavity (91) which is able to accommodate a bar (2) and includes a second opening (92) made in said second face (90),
**characterised in that** the second device is able to carry out a fractional rotation movement about a second axis (93), aligned longitudinally, and to do so between at least two angular positions which are a first angular position (901) in which the second cavity (91) is located opposite a first cavity (71), placed at the first station, (8) and a second angular position (902) in which said second cavity (91) is radially closed off in such a way that the bar (2) it holds is guided in rotation and in translation along the longitudinal axis (200) it has.

2. Installation according to claim 1, **characterised in that:**
- each first cavity (71) has longitudinal and transverse dimensions which are adapted to permit the accommodation of a bar (2) of predetermined maximal longitudinal and transverse dimensions, and
- the first opening (72) of each first cavity (71) has longitudinal and transverse dimensions which are adapted to permit equally the insertion of a bar (2) in the first cavity (71) and the extraction of a bar (2) from this first cavity (71), and this in a first direction (R1) radial with respect to the first body (7).

3. Installation according to claim 1 or 2, **characterised in that:**
- each second cavity (91) has longitudinal and transverse dimensions which are adapted to permit the accommodation of a bar (2) of predetermined maximal longitudinal and transverse dimensions, and
- the second opening (92) of each second cavity (91) has longitudinal and transverse dimensions which are adapted to permit equally the insertion of a bar (2) in the second cavity (91) and the extraction of a bar (2) from the second cavity (91), and this in a second direction (R2) radial with respect to the second body (9).

4. Installation according to any one of the claims 1 to 3, **characterised in that** it is equipped with a third device (1000) which co-operates with the second device (900) and is able to ensure the displacement in translation of the bar (2) contained in the second cavity (91), and this
- in a first direction (101) corresponding to a direction of insertion of the bar (2) in a machining centre (4) and
- in a second direction (102), opposite to the first direction (101), with a view to withdrawing from the machine tool (4) a segment (20) of the bar (2) which has not been used and of putting this segment back in the second cavity (91) which contained the bar (2) from which this segment (20) originated.

5. Installation according to any one of the claims 1 to 4, **characterised in that** the second body (9) of the second device (900) is able to carry out a fractional rotational movement toward a third angular position (903) in which each second cavity (91) is presented to a removal station, referred to as second station (10), at the level of which the segment (20) can be removed from the second cavity (91).

6. Installation according to any one of the claims 1 to 5, **characterised in that** each first cavity (71) has a first opening (72) which is of first width (L10) greater than the outer diameter (D) of the bar (2) which must be inserted into this first cavity (71), and said first cavity (71) has a cross section determined by a first inner surface of substantially C-shaped contour, in which a first diametral dimension (D10) is inscribed which is greater than the first width (L10) of said first opening (72).

7. Installation according to any one of the claims 1 to 6, **characterised in that** each second cavity (91) has a second opening (92) which is of second width (L20) greater than the outer diameter (D) of the bar (2) which must be inserted into this second cavity (91), and said second cavity (91) has a cross section determined by a second inner surface of substantially U-shaped contour in which a second diametral dimension (D20) is inscribed substantially equal to the second width (L20) of said second opening (92).

8. Installation according to any one of the claims 1 to 7, **characterised in that** it comprises at least one first group (11) of two first bearing surfaces (12) which, each intended to co-operate with the first face (70) of the first body (7) on a predetermined portion of its longitudinal dimension,
- are separated by a predetermined distance in order to define a substantially horizontal cylindrical support,
- each extend on at least a first angular portion of the predetermined first face (70) to
• ensure a cylindrical support for the first body (7),
• permit radial access to at least one first cavity (71) with a view to loading of a bar (2),
• impede the fall of bars (2) outside of each first cavity (71) which contains the bar during the rotation of said first body (7) with a view to presenting each first cavity (71) in sequence in front of at least a first station (8),
• permit the extraction of a bar (2) at said first station (8).

9. Installation according to any one of the claims 1 to 8, **characterised in that** the first body (7) is constituted by assembly of at least one first section (701) on a first shaft (702).

10. Installation according to claim 9, **characterised in that** it comprises as many first groups (11) of first bearing surfaces (12) as it comprises first sections (701).

11. Installation according to any one of the claims 1 to 10, **characterised in that** it comprises at least one second group (13) of two second bearing surfaces (14) which, each intended to co-operate with the second face (90) of the second body (9) on a predetermined portion of its longitudinal dimension,
- are separated by a predetermined distance to define a substantially horizontal cylindrical support,
- each extend on at least a second angular portion of the predetermined second face (90) to
• ensure a cylindrical support for the second body (9) at least between the angular positions (901, 902, 903) referred to as first, second and third, in such a way as to
• allow, in the first angular position (901), radial access to at least one second cavity (91) with a view to loading a bar (2) in the second cavity (91) when it is situated opposite a first cavity (71) placed at the first station (8),
•• impede the fall of the bar (2) during the rotation of said second body (9) toward the second angular position (902),
•• participate in guiding the bar (2) in rotation and in translation when the second body (9) is placed in the second angular position (902),
•• impede the fall of a segment (20) of bar (2) during the rotation of said second body (9) toward the third angular position (903) and permit its fall when said third angular position (903) is reached.

12. Installation according to any one of the claims 1 to 11, **characterised in that** the second body (9) is constituted by assembly of at least one second section (904) on a second shaft (905).

13. Installation according to claim 12, **characterised in that** it comprises as many second groups (13) of second bearing surfaces (14) as it comprises second sections (904).

14. Installation according to any one of the claims 1 to 13, **characterised in that:**
- the first body (7) has a first axis (73) which is substantially horizontal, and the first station (8) is situated plumb with a lower longitudinal generatrix of said first body (7),
- the second body (9) has a second axis (93) which is substantially horizontal and is situated under the level of the first body (7) and in a vertical plane which passes through the first axis (73) of the first body (7),
- the first angular position (901) of the second body (9) corresponds to the situation in which the second cavity (91) is placed facing a first cavity (71) presented to the first station (8),
- the third angular position (903) of the second body (9) corresponds to the situation in which the second opening (92) of a second cavity (91) which contains a segment (20) is presented to the second station (10), and this third angular position (903) is offset by approximately one hundred eighty degrees with respect to the first angular position (901), in such a way that the segment (20) can be removed by gravity,
- the second angular position (902) of the second body (9) is between the first angular position (901) and the third angular position (903).

15. Installation according to any one of the claims 1 to 14, **characterised in that** the first station (8) comprises a fourth device (2000) to assist the transfer of a bar (2) situated in a first cavity (71) of the first body (7) toward a second cavity (91) of the second body (9).

16. Installation according to claim 15, **characterised in that:**
- the first sections (701) assembled on the first shaft (702) with a view to constituting the first body (7) are spaced axially, in pairs, by a first predetermined value in such a way as to define a first clearance (703),
- the second sections (904) assembled on the second shaft (905) with a view to constituting the second body (9) are spaced axially, in pairs, by a second predetermined value, in such a way as to define a second clearance (906),
- the fourth device (2000) for the transfer of a bar (2), situated in a first cavity (71) of the first body (7), toward a second cavity (91) of the second body (9) comprises elements which are disposed to be active in said first clearance (703) and second clearance (906).

17. Installation according to any one of the claims 1 to 16, **characterised in that** the first body (7) comprises a plurality of series of first cavities (71) which have different cross sections.

18. Installation according to any one of the claims 1 to 17, **characterised in that** the second body (9) comprises a plurality of second cavities (91) which have different cross sections.

19. Installation according to any one of the claims 1 to 18, **characterised in that** the first body (7) and the second body (9) are, at the level of the first station (8), substantially tangent along longitudinal generatrices.

## Patentansprüche

1. Einrichtung zum sequenziellen Zuführen (1) von Materialstangen, bezeichnet als Stange (2), in eine Werkzeugmaschine (4), wobei diese Einrichtung insbesondere einen Rahmen (5) umfasst, der mit Folgendem ausgestattet ist:
- mit einer ersten Vorrichtung (700), die
. einerseits durch einen ersten verlängerten Körper (7) gebildet ist, dessen Volumen im Wesentlichen durch eine Umfangsoberfläche, bezeichnet als erste Oberfläche (70), bestimmt ist, und der eine Vielzahl von ersten länglichen Hohlräumen (71) umfasst, die jeweils dazu in der Lage sind, eine Stange (2) aufzunehmen, und jeweils eine erste Öffnung (72) umfassen, die auf der ersten Oberfläche (70) angebracht ist,
. andererseits dazu in der Lage ist, eine unterteilte Drehung um eine erste Achse (73) durchzuführen, die der Länge nach ausgerichtet ist, insbesondere beim Tragen von Stangen (2), um sequenziell die ersten Hohlräume (71) an mindestens einer ersten Stelle (8) anzuordnen,
- mit einer zweiten Vorrichtung (900), die aus einem zweiten verlängerten Körper (9) gebildet ist, dessen Volumen im Wesentlichen durch eine Umfangsoberfläche, bezeichnet als zweite Oberfläche (90), bestimmt ist, und mindestens einen zweiten länglichen Hohlraum (91) umfasst, der dazu in der Lage ist, eine Stange (2) aufzunehmen und eine zweite Öffnung (92) umfasst, die auf der zweiten Oberfläche angebracht (90) ist,
**dadurch gekennzeichnet, dass** die zweite Einrichtung dazu in der Lage ist, eine unterteilte Drehverschiebung um eine zweite Achse (93) durchzuführen, die der Länge nach ausgerichtet ist, und dies zwischen mindestens zwei Winkelpositionen, darunter einer ersten Winkelposition (901), in der sich der zweite Hohlraum (91) gegenüber einem ersten Hohlraum (71) befindet, der an der ersten Stelle angeordnet ist, und einer zweiten Winkelposition (902), in der der zweite Hohlraum (91) radial geschlossen ist, so dass die Stange (2), die er zurückhält, in der Übertragungsdrehung gemäß der Längsachse (200), die sie darstellt, geführt wird.

2. Einrichtung nach Anspruch 1, **dadurch gekennzeichnet, dass:**
- jeder erste Hohlraum (71) eine Längs- und eine Querabmessung aufweist, die dazu angepasst sind, die Aufnahme einer Stange (2) mit einer maximalen vorherbestimmten Längs- und Querabmessung zu ermöglichen, und
- die erste Öffnung (72) jedes ersten Hohlraums (71) eine Längs- und eine Querabmessung aufweist, die dazu angepasst sind, unterschiedslos die Einführung einer Stange (2) in den ersten Hohlraum (71) und die Entfernung einer Stange (2) aus diesem ersten Hohlraum (71) zu ermöglichen, und dies in einer ersten radialen Richtung ("R1") zum ersten Körper (7).

3. Einrichtung nach Anspruch 1 oder 2, **dadurch gekennzeichnet, dass:**
- jeder zweite Hohlraum (91) eine Längs- und eine Querabmessung aufweist, die dazu angepasst sind, die Aufnahme einer Stange (2) mit einer maximalen vorherbestimmten Längs- und Querabmessung zu ermöglichen, und
- die zweite Öffnung (92) jedes zweiten Hohlraums (91) eine Längs- und eine Querabmessung aufweist, die dazu angepasst sind, unterschiedslos die Einführung einer Stange (2) in den zweiten Hohlraum (91) und die Entfernung einer Stange (2) aus dem zweiten Hohlraum (91) zu ermöglichen, und dies in einer zweiten radialen Richtung ("R2") zum zweiten Körper (9).

4. Einrichtung nach einem der Ansprüche 1 bis 3, **dadurch gekennzeichnet, dass** sie mit einer dritten Einrichtung (1000) ausgestattet ist, die mit der zweiten Einrichtung (900) zusammenarbeitet und dazu in der Lage ist, die Übertragungsverschiebung der Stange (2), enthalten im zweiten Hohlraum (91), sicherzustellen, und dies
- in einer ersten Richtung (101), die einer Einführungsrichtung der Stange (2) in eine Werkzeugmaschine (4) entspricht, und
- in einer zweiten Richtung (102), die der ersten Richtung (101) entgegengesetzt ist, um aus der Werkzeugmaschine (4) ein Segment (20) der Stange (2) herauszuziehen, das nicht verwendet wird, und dieses Segment im zweiten Hohlraum (91) wieder anzuordnen, der die Stange (2), von der dieses Segment (20) stammt, enthielt.

5. Einrichtung nach einem der Ansprüche 1 bis 4, **dadurch gekennzeichnet, dass** der zweite Körper (9) der zweiten Einrichtung (900) dazu in der Lage ist, eine unterteilte Drehverschiebung in eine dritte Winkelposition (903) durchzuführen, in der jeder zweite Hohlraum (91) an einer Evakuierungsstelle, bezeichnet als zweite Stelle (10), angeordnet wird, auf dessen Ebene das Segment (20) aus dem zweiten Hohlraum (91) evakuiert werden kann.

6. Einrichtung nach einem der Ansprüche 1 bis 5, **dadurch gekennzeichnet, dass** jeder erste Hohlraum (71) eine erste Öffnung (72) aufweist, die eine erste Länge ("L10") hat, die größer als der Außendurchmesser ("D") der Stange (2) ist, die in diesen ersten Hohlraum (71) eingeführt werden muss, und der erste Hohlraum (71) einen Querschnitt aufweist, der durch eine erste Innenfläche mit einem Profil bestimmt ist, das im Wesentlichen die Form eines (C) hat, in das eine erste Querabmessung ("D10") eingeschrieben ist, die größer als die erste Länge ("L10") der ersten Öffnung (72) ist.

7. Einrichtung nach einem der Ansprüche 1 bis 6, **dadurch gekennzeichnet, dass** jeder zweite Hohlraum (91) eine zweite Öffnung (92) aufweist, die eine zweite Länge ("L20") hat, die größer als der Außendurchmesser ("D") der Stange (2) ist, die in diesen zweiten Hohlraum (91) eingeführt werden muss, und der zweite Hohlraum (91) einen Querschnitt aufweist, der durch eine zweite Innenfläche mit einem Profil bestimmt ist, das im Wesentlichen die Form eines (U) hat, in das eine zweite Querabmessung ("D20") eingeschrieben ist, die im Wesentlichen gleich der zweiten Länge ("L20") der zweiten Öffnung (92) ist.

8. Einrichtung nach einem der Ansprüche 1 bis 7, **dadurch gekennzeichnet, dass** sie mindestens eine erste Gruppe (11) mit zwei ersten Bereichen (12) umfasst, die, jeweils dazu vorgesehen, mit der ersten Oberfläche (70) des ersten Körpers (7) auf einem vorbestimmten Teil ihrer Längsausdehnung zusammenzuarbeiten,
- mit einem vorbestimmten Abstand voneinander getrennt sind, um ein im Wesentlichen horizontales Wälzlager zu definieren,
- sich jeweils auf mindestens einem ersten Winkelabschnitt der ersten Oberfläche (70) erstrecken, der vorbestimmt ist, um
. ein Wälzlager des ersten Körpers (7) sicherzustellen,
. den radialen Zugang zu mindestens einem ersten Hohlraum (71) zur Zuführung einer Stange (2) zu ermöglichen,
. dem Fall von Stangen (2) aus jedem ersten Hohlraum (71), der sie enthält, während der Drehung des ersten Körpers (7), um sequenziell jeden ersten Hohlraum (71) vor mindestens einer ersten Stelle (8) anzuordnen, entgegenzuwirken,
. die Entfernung einer Stange (2) der ersten Stelle (8) zu ermöglichen.

9. Einrichtung nach einem der Ansprüche 1 bis 8, **dadurch gekennzeichnet, dass** der erste Körper (7) aus einer Anordnung von mindestens einem ersten Stück (701) auf einer ersten Welle (702) besteht.

10. Einrichtung nach Anspruch 9, **dadurch gekennzeichnet, dass** sie ebenso viele erste Gruppen (11) mit ersten Bereichen (12) enthält, wie sie erste Stücke (701) umfasst.

11. Einrichtung nach einem der Ansprüche 1 bis 10, **dadurch gekennzeichnet, dass** sie mindestens eine zweite Gruppe (13) mit zwei zweiten Bereichen (14) umfasst, die, jeweils dazu vorgesehen, mit der zweiten Oberfläche (90) des zweiten Körpers (9) auf einem vorbestimmten Teil ihrer Längsausdehnung zusammenzuarbeiten,
- mit einem vorbestimmten Abstand voneinander getrennt sind, um ein im Wesentlichen horizontales Wälzlager zu definieren,
- sich jeweils auf mindestens einem zweiten Winkelabschnitt der zweiten Oberfläche (90) erstrecken, der vorbestimmt ist, um
. ein Wälzlager des zweiten Körpers (9) mindestens zwischen den Winkelpositionen (901, 902, 903), bezeichnet als erste, zweite und dritte Position, sicherzustellen, um
. in der ersten Winkelposition (901) den radialen Zugang zu mindestens einem zweiten Hohlraum (91) zum Zuführen einer Stange (2) in den zweiten Hohlraum (91) zuzulassen, wenn er sich gegenüber einem ersten Hohlraum (91) befindet, der an der ersten Stelle (8) angeordnet ist,
.. dem Fall der Stange (2) während der Drehung des zweiten Körpers (9) in die zweite Winkelposition (902) entgegenzuwirken,
.. an der Drehungs- und Übertragungsführung der Stange (2) teilzunehmen, wenn der zweite Körper (9) in der zweiten Winkelposition (902) angeordnet ist,
.. dem Fall eines Segments (20) der Stange (2) während der Drehung des zweiten Körpers (9) in die dritte Winkelposition (9) entgegenzuwirken und ihren Fall zu ermöglichen, wenn die dritte Winkelposition (903) erreicht ist.

12. Einrichtung nach einem der Ansprüche 1 bis 11, **dadurch gekennzeichnet, dass** der zweite Körper(9) aus einer Anordnung von mindestens einem zweiten Stück (904) auf einer zweiten Welle (905) besteht.

13. Einrichtung nach Anspruch 12, **dadurch gekennzeichnet, dass** sie ebenso viele zweite Gruppen (13) mit zweiten Bereichen (14) enthält, wie sie zweite Stücke (904) umfasst.

14. Einrichtung nach einem der Ansprüche 1 bis 13, **dadurch gekennzeichnet, dass:**
- der erste Körper (7) eine erste Achse (73) aufweist, die im Wesentlichen horizontal ist, und die erste Stelle (8) sich senkrecht zu einem länglichen Generator unter dem ersten Körper (7) befindet,
- der zweite Körper (9) eine zweite Achse (93) aufweist, die im Wesentlichen horizontal ist, und sich unter dem Niveau des ersten Körpers (7) und auf einer vertikalen Ebene befindet, die durch die erste Achse (73) des ersten Körpers (7) verläuft,
- die erste Winkelposition (901) des zweiten Körpers (9) der Situation entspricht, in der sich der zweite Hohlraum (91) hinsichtlich eines ersten Hohlraums (71) befindet, der an der ersten Stelle (8) angeordnet ist,
- die dritte Winkelposition (903) des zweiten Körpers (9) der Situation entspricht, in der die zweite Öffnung (92) eines zweiten Hohlraums (91), der ein Segment (20) enthält, an der zweiten Stelle (10) angeordnet ist, und diese dritte Winkelposition (903) im Wesentlichen um einhundertachtzig Grad hinsichtlich der zweiten Winkelposition (901) verschoben wird, so dass das Segment (20) mithilfe der Schwerkraft evakuiert werden kann,
- die zweite Winkelposition (902) des zweiten Körpers (9) zwischen der ersten Winkelposition (901) und der dritten Winkelposition (903) liegt.

15. Einrichtung nach einem der Ansprüche 1 bis 14, **dadurch gekennzeichnet, dass** die erste Stelle (8) eine vierte Einrichtung (2000) umfasst, um die Übertragung einer Stange (2), die sich in einem ersten Hohlraum (71) des ersten Körpers (7) befindet, auf einen zweiten Hohlraum (91) des zweiten Körpers (9) zu unterstützen.

16. Einrichtung nach Anspruch 15, **dadurch gekennzeichnet, dass:**
- die ersten Stücke (701), die auf der ersten Welle (702) angeordnet sind, um den ersten Körper (7) zu bilden, paarweise axial um einen ersten, vorbestimmten Wert beabstandet sind, um eine erste Beabstandung (703) festzulegen,
- die zweiten Stücke (904), die auf der zweiten Welle (905) angeordnet sind, um den zweiten Körper (9) zu bilden, paarweise axial um einen zweiten, vorbestimmten Wert beabstandet sind, um eine zweite Beabstandung (906) festzulegen,
- die vierte Einrichtung (2000) zur Übertragung einer Stange (2), die sich in einem ersten Hohlraum (71) des ersten Körpers (7) befindet, auf einen zweiten Hohlraum (91) des zweiten Körpers, umfasst Organe, die angeordnet sind, um in der ersten Beabstandung (703) und der zweiten Beabstandung (906) aktiv zu sein.

17. Einrichtung nach einem der Ansprüche 1 bis 16, **dadurch gekennzeichnet, dass** der erste Körper (7) mehrere Reihen von ersten Hohlräumen (71) umfasst, die verschiedene Querschnitte aufweisen.

18. Einrichtung nach einem der Ansprüche 1 bis 17, **dadurch gekennzeichnet, dass** der zweite Körper (9) mehrere zweite Hohlräume (91) umfasst, die verschiedene Querschnitte aufweisen.

19. Einrichtung nach einem der Ansprüche 1 bis 18, **dadurch gekennzeichnet, dass** sich der erste Körper (7) und der zweite Körper (9) auf der Ebene der ersten Stelle (8) im Wesentlichen entlang der länglichen Generatoren berühren.
